# EUROPEAN PATENT APPLICATION

(11) **EP 2 573 759 A2**
(43) Date of publication of application: **27.03.2013**
(21) Application number: 12185000.2
(22) Date of filing: 19.09.2012
(51) Int. Cl.: G09G 5/14

(54) **Display apparatus and method**

(30) Priority: 20.09.2011 US 201161536671 P; 05.12.2011 KR 20110129162
(71) Applicant: Samsung Electronics Co., Ltd., Suwon-si, Gyeonggi-do, 443-742 (KR)
(72) Inventor: Jang, Jae-young, Gyeonggi-do (KR); Bang, Hyo-sang, Seoul (KR); Seung, Jung-ah, Gyeonggi-do (KR)
(74) Representative: Davies, Robert Ean

(57) **Abstract**

A display apparatus includes a control unit for displaying a first content in a first area of a display screen, and a multi-contents generation unit for generating a plurality of second contents, wherein the control unit divides a second area of the display screen into a plurality of areas, and the plurality of second contents are respectively displayed in areas of the second area.

## Description

Disclosed herein is a display apparatus and method.

In general, digital imaging apparatuses, including a digital camera or a camcorder, display an image or a motion picture stored in a recording medium on a display screen in a display mode. Also, data including captured images and motion pictures often have relevance with each other.

For example, a motion picture and an image may be simultaneously obtained by dual-capturing or dual-recording. However, since there is no method to simultaneously display files generated in this manner, the captured motion picture and image are separately reproduced.

The following describes a display apparatus and method for displaying and reproducing various multi-contents in one organized page.

According to an embodiment of the invention, a display apparatus includes a control unit for displaying a first content in a first area of a display screen, and a multi-contents generation unit for generating a plurality of second contents, wherein the control unit divides a second area of the display screen into a plurality of areas, and the plurality of second contents are respectively displayed in areas of the second area.

The plurality of second contents may include a thumbnail image.

The plurality of second contents may include a motion picture.

The plurality of second contents displayed in the respective areas of the second area may include a plurality of thumbnail images, and the control unit may reproduce a plurality of motion pictures corresponding to the plurality of thumbnail images.

The control unit may sequentially reproduce the plurality of second contents that are displayed, in the respective areas of the second area.

The plurality of second contents displayed in the respective areas of the second area may include a plurality of thumbnail images, and the control unit may reproduce a plurality of motion pictures corresponding to the plurality of thumbnail images in the respective areas of the second area.

The control unit may reproduce a first motion picture of the plurality of motion pictures in a first subarea of the respective areas of the second area until a frame corresponding to a first thumbnail image of the plurality of thumbnail images and terminates the reproduction.

The control unit may reproduce a first motion picture of the plurality of motion pictures in a first subarea of the respective areas of the second area from a frame corresponding to a first thumbnail image of the plurality of thumbnail images.

The control unit may reproduce a first motion picture of the plurality of motion pictures in a first subarea of the respective areas of the second area until a frame corresponding to a first thumbnail image of the plurality of thumbnail images, and displays the first thumbnail image in the first subarea.

The control unit may reproduce a second motion picture of the plurality of motion pictures in a second subarea of the respective areas of the second area from a frame corresponding to a second thumbnail image of the plurality of thumbnail images.

The plurality of second contents displayed in the second area may include a plurality of thumbnail images, and the control unit may sequentially reproduce a plurality of motion pictures corresponding to the plurality of thumbnails in the respective areas of the second area.

The plurality of second contents may include a plurality of thumbnail images, and the control unit may sequentially reproduce the plurality of motion pictures in the respective areas of the second area and increase a size of a motion picture that is being reproduced.

The plurality of second contents may include a plurality of motion pictures, and each of the plurality of motion pictures may include a dual-captured motion picture.

The first content and the plurality of second contents may be included in a dual-captured file.

The plurality of second contents may include a plurality of motion pictures, and the plurality of motion pictures may include motion pictures extracted from a single dual-captured motion picture.

The first content may be one of a still image, a motion picture, and a slide image formed of the still image.

The first content may be a motion picture, and the plurality of the second contents may be a plurality of thumbnail images corresponding to a plurality of still images obtained during capturing of the motion picture.

The first content may be a motion picture, and the plurality of the second contents each may be a thumbnail image corresponding to a still image including the same face as that appearing during reproduction of the motion picture, of the plurality of still images obtained during capturing of the motion picture.

According to another embodiment of the invention, a display apparatus includes a control unit for displaying a dual-captured image including a still image or a motion picture in a first area of a display screen, and a multi-contents generation unit for generating a plurality of images and motion pictures related to the dual-captured image, wherein the control unit displays the plurality of images in a plurality of subareas obtained by dividing a second area of the display screen, reproduces a first motion picture of the plurality of motion pictures in a first subarea of the plurality of the subareas until a frame corresponding to a first image of the plurality of images and then displays the first image again in the first subarea, and reproduces a second motion picture of the plurality of motion pictures in a second subarea of the plurality of the subareas until a frame corresponding to a second image of the plurality of images.

According to another embodiment of the invention, a display method includes displaying a first content in a first area of a display screen, generating a plurality of second contents, dividing a second area of the display screen into a plurality of areas, and displaying the plurality of second contents in the respective areas of the second area.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram schematically illustrating a structure of a digital camera that is an example of a display apparatus according to an embodiment of the invention; and
FIGS. 2 to 6 are screen shot views for explaining display operations according to embodiments of the invention.

While the invention has been particularly shown and described with reference to exemplary embodiments using specific terminologies, the embodiments and terminologies should be considered in descriptive sense only and not for purposes of limitation. Therefore, it will be understood by those of ordinary skill in the art that various changes in form and details may be made therein without departing from the spirit and scope of the invention as defined by the following claims. That is, descriptions on particular structures or functions may be presented merely for explaining embodiments of the invention. In the following description, when detailed descriptions about related well-known functions or structures are determined to make the gist of the invention unclear, the detailed descriptions will be omitted herein.

The terms such as "first" and "second" are used herein merely to describe a variety of constituent elements, but the constituent elements are not limited by the terms. The terms are used only for the purpose of distinguishing one constituent element from another constituent element. For example, without departing from the right scope of the invention, a first constituent element may be referred to as a second constituent element, and vice versa.

The terms used in the present specification are used for explaining a specific embodiment, not limiting the prevent invention. Thus, the expression of singularity in the present specification includes the expression of plurality unless clearly specified otherwise in context. Also, the terms such as "include" or "comprise" may be construed to denote a certain characteristic, number, step, operation, constituent element, or a combination thereof, but may not be construed to exclude the existence of or a possibility of addition of one or more other characteristics, numbers, steps, operations, constituent elements, or combinations thereof.

Unless defined otherwise, all terms used herein including technical or scientific terms have the same meanings as those generally understood by those skilled in the art to which the invention may pertain. The terms as those defined in generally used dictionaries are construed to have meanings matching that in the context of related technology and, unless clearly defined otherwise, are not construed to be ideally or excessively formal.

As used herein, the term "and/or" includes any and all combinations of one or more of the associated listed items. Expressions such as "at least one of," when preceding a list of elements, modify the entire list of elements and do not modify the individual elements of the list.

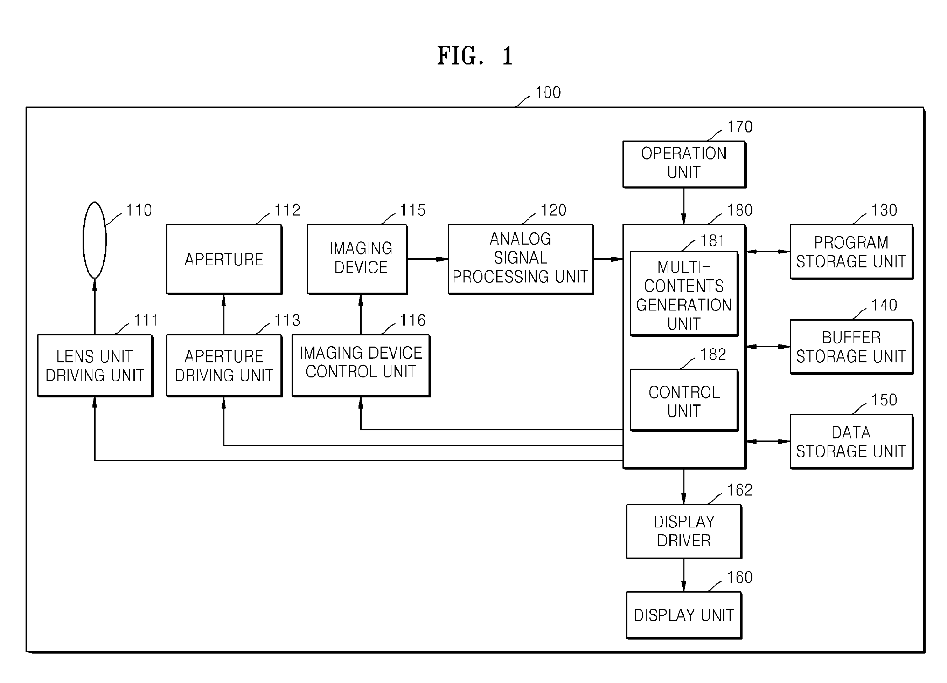

FIG. 1 is a block diagram schematically illustrating a structure of a digital camera 100 that is an example of a display apparatus according to an embodiment of the invention. Referring to FIG. 1, the digital camera 100 is described as an example of a display apparatus according to an embodiment of the invention. However, the display apparatus is not limited to the digital camera 100 illustrated in FIG. 1 and may be applied to portable devices such as a camera phone, a personal digital assistant (PDA), a portable multimedia player (PMP), a camcorder, etc. Also, the display apparatus according to the present embodiment may be applied to all home appliances such as TV sets, monitors, etc., having a display function of displaying all contents.

The digital camera 100 according to the present embodiment includes a lens unit 110, a lens unit driving unit 111, an aperture 112, an aperture driving unit 113, an imaging device 115, an imaging device control unit 116, an analog signal processing unit 120, a program storage unit 130, a buffer storage unit 140, a data storage unit 150, a display unit 160, a display driving unit 162, a digital signal processor (DSP) 180, and a manipulation/operation unit 170. The lens unit 110, the lens unit driving unit 111, the aperture 112, the aperture driving unit 113, the imaging device 115, the imaging device control unit 116, and the analog signal processing unit 120 may be referred to as an imaging portion.

The lens unit 110 focuses an optical signal. The lens unit 110 includes a zoom lens for controlling an increase or decrease of a viewing angle according to a focal length and a focus lens for focusing a focal point of an object. The zoom lens and the focus lens each may be formed of a single lens or a group of lenses. The aperture 112 adjusts a degree of opening/closing of the lens unit 110 to control the amount of incident light.

The lens unit driving unit 111 and the aperture driving unit 113 receives a control signal from the DSP 180 to drive the lens unit 110 and the aperture 112. The lens unit driving unit 111 adjusts the location of the lens unit 110 to control the focal length and performs operations such as auto focusing, zooming, change of a focal point, etc. The aperture driving unit 113 adjusts a degree of opening/closing of the aperture 112, in particular, an f number or an aperture value to perform operations such as auto focus, auto exposure correction, change of a focal point, control of depth of field, etc.

An optical signal passing through the lens unit 110 arrives at a light-receiving surface of the imagining device 115 and forms an image of an object. The imaging device 115 may be a charge-coupled device (CCD), a complementary metal oxide semiconductor image sensor (CIS), or a high speed image sensor, which converts an optical signal to an electric signal. The imaging device control unit 116 may control a sensitivity of the imaging device 115. The imaging device control unit 116 may control the imaging device 115 according to a control signal manually input by a user's manipulation or a control signal automatically generated in response to an image signal that is input real time. An exposure time of the imaging device 115 is controlled by a shutter (not shown). The shutter includes a mechanical shutter for controlling input of light by moving blades and an electronic shutter for controlling exposure by applying an electric signal to the imaging device 115.

The analog signal processing unit 120, in response to an analog signal applied from the imaging device 115, performs noise reduction processing, gain control, wave shaping, analog-to-digital conversion, etc.

A user inputs an external control signal via, for example, the manipulation/operation unit 170. The manipulation/operation unit 170 may include a shutter-release button for inputting a shutter-release signal to capture a picture by exposing the imaging device 115 to light for a predetermined time, a power button for inputting a control signal to control power-on or power-off, a wide-zoom button and a tele-zoom button for increasing or decreasing a viewing angle according to an input, and various functional buttons for selecting a mode between a text input mode, a capturing mode, and a display mode, and for performing a white balance setting function, an exposure setting function, etc. Although the manipulation unit 170 may have such various types of buttons, the invention is not limited thereto and any type of buttons such as a keyboard, a touch pad, a touch screen, a remote controller, etc. that a user can use to input may be included. In the present embodiment, a user may input a data display operation through a touch pad or a touch screen provided in the display unit 160.

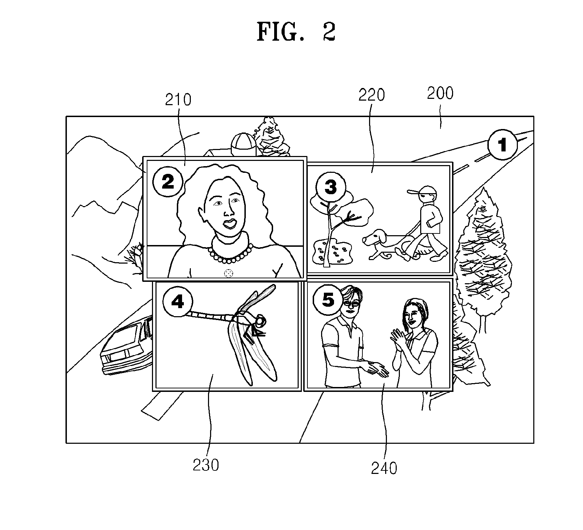

The digital camera 100 according to the present embodiment displays an image on the display unit 160 that is divided into two areas. For example, the display unit 160 is divided into a main area and an auxiliary area and different data is displayed in each area. For example, while a motion picture or a still image is displayed in the main area, a still image obtained during capturing of a motion picture or a summary motion picture obtained during capturing of a motion picture may be displayed in the auxiliary area. Also, the auxiliary area of the display unit 160 is divided into, for example, four block areas, so that four different still images, thumbnail images corresponding to the still images, or four different motion pictures may be displayed in the four block areas. Also, the digital camera 100 displays a dual-captured still image or motion picture in the main area and reproduces a dual-captured motion picture in a first subarea of four subareas obtained by dividing the auxiliary area. In doing so, the reproduction of the motion picture is paused at a time when the still image is captured and a next frame is reproduced. Accordingly, the motion picture is reproduced in a second subarea at a next frame time point or when a second still image is captured. That is, the dual-captured motion pictures may be sequentially reproduced in the subareas. Detailed embodiments of the invention are described in detail with reference to FIGS. 2 to 9.

The digital camera 100 includes the program storage unit 130 for storing programs such as an operating system or an application system for driving the digital camera 100, the buffer storage unit 140 for temporarily storing data needed for performing an operation or result data, and the data storage unit 150 for storing various information needed for the programs including an image file including an image signal.

The digital camera 100 includes the display unit 160 for displaying an operation state of the digital camera 100 or still image data or motion picture data obtained by the digital camera 100. The display unit 160 may provide a user with visual information and audible information. To provide visual information, the display unit 160 may be formed as, for example, a liquid crystal display (LCD) panel, an organic light-emitting display (OLED) panel, etc. The display driving unit 162 provides a drive signal to the display unit 160.

The digital camera 100 includes the DSP 180 for processing input image signals and controlling constituent elements of the digital camera 100 according to the processed input image signals or an external input signal. The DSP 180 may reduce noise of the input image data and perform image signal processing for improving image quality such as gamma correction, color filter array interpolation, color matrix, color correction, color enhancement, etc. Also, the DSP 180 may compress image data generated through the image signal processing for image quality improvement, to generate an image file, or restore the image data from the image file. The compression type of an image includes a reversible (lossless) format or an irreversible (lossy) format. The compressed data may be stored in the data storage unit 150. Also, the DSP 180 may functionally perform color processing, blur processing, edge emphasis processing, image interpretation processing, image recognition processing, image effect processing, etc. The image recognition processing may include face recognition processing, scene recognition processing, etc. For example, the DSP 180 may perform generation of an image through brightness level control, color correction, contrast control, outline emphasis control, screen division processing, character image, etc., and synthesis processing of a generated image.)

Also, the DSP 180 may execute the programs stored in the program storage unit 130, be provided with a separate module to generate a control signal for controlling auto focusing, zooming, focal point change, auto exposure correction, etc., and may supply the control signal to the lens unit driving unit 111, the aperture driving unit 113, and the imaging device control unit 116, and generally control operations of constituent elements, such as a shutter and a flash, of the digital camera 100.

The DSP 180 displays captured motion pictures, still images, or still images in a slide form in the first area of the display unit 160. While displaying a motion picture or a still image, the DSP 180 displays thumbnail images corresponding to a plurality of motion pictures or still images in the second area of the display unit 160. Still image data and motion picture data are related with each other and may be data obtained by continuous shot, pre-recording, or dual-shot. For example, while capturing a motion picture for one minute, a user may obtain a still image by pressing the shutter release button at a desired scene to have a desired scene in the form of a still image. For example, when four shots of still images are captured for one minute, motion picture data for one minute and still image data for four shots may be obtained. In this case, the DSP 180 in a reproduction mode reproduces a motion picture in the first area and simultaneously divides the second area into four subareas to display four shots of thumbnail images corresponding to the four shots of still images in the four subareas, respectively. Also, when more captured still images exist, thumbnail images may be sequentially displayed in the divided four subareas synchronized with motion picture reproduction timing. Although the contents displayed in the first and second areas are described as those related to each other, that is, dual-captured images, the invention is not limited thereto and different or same type of contents may be displayed together.

The DSP 180 may further include an additional motion picture decoder for reproducing a plurality of different motion picture files in a plurality of subareas obtained by dividing the second area. The additional motion picture decoder may be embodied by adding a software motion picture decoder or a hardware motion picture decoder, but the invention is not limited thereto. Also, to capture a motion picture and simultaneously store a desired or important scene in the form of a motion picture file, a summary motion picture of a corresponding section may be generated by pressing a motion picture capture button twice. For example, while a 10-minute motion picture is captured, four 10-second motion pictures are captured so that a 10-minute motion picture file and four 10-second summary motion picture files that are related to the 10-minute motion picture file or dual-captured may ob obtained. In this case, the DSP 180 generates and stores, as thumbnail images, the images corresponding to the final frame of a motion picture frame corresponding to the four 10-second summary motion picture files.

When a corresponding dual-captured file is selected in a reproduction mode, a 10-minute main motion picture is reproduced in the first area and simultaneously the stored four shots of thumbnail images are displayed in the four subareas of the second area. The first summary motion picture is reproduced in the first area of the four subareas at the capturing time of the first summary motion picture. Then, the reproduction of the first summary motion picture is paused at the frame of the first summary motion picture corresponding to the thumbnail image. The second summary motion picture is reproduced in the second area of the four subareas at the capturing time of the second summary motion picture. Then, the reproduction of the second summary motion picture is paused at the frame of the second summary motion picture corresponding to the second thumbnail image. The third and fourth summary motion pictures may be reproduced in the same manner. Detailed embodiments are described below with reference to FIGS. 2 to 9.

The DSP 180 includes a multi-contents generation unit 181 and a control unit 182.

The multi-contents generation unit 181 generates multi-contents that are displayed in the subareas of the second area of the display unit 160. The multi-contents may be a plurality of still images or motion pictures that are dual-captured or related to a content displayed in the first area. For example, when a motion picture is displayed or reproduced in the first area, the multi-contents generation unit 181 displays or reproduces a still image related to the motion picture that is being displayed or reproduced, a summary motion picture of the motion picture that is being reproduced, or other related motion pictures, in the subareas of the second area. The multi-contents are sequentially reproduced in the respective subareas). The multi-contents generation unit 181 manages data, for example, a still image, a motion picture, or a summary motion picture, stored as related contents, not dual-captured through, altogether.

The control unit 182 displays a motion picture, a still image, or a slide image formed of still images in the first area of a display screen of the display unit 160, and a still image or a motion picture related to the image displayed in the first area in a subarea of the second area.

FIGS. 2 to 6 are views for explaining display operations according to embodiments of the invention. Referring to FIG. 2, an image related to dual-capturing is displayed in the first area 1 or the main area of the display screen. The image displayed in the first area 1 may be a motion picture, a still image, or a slide image formed of still images. The second area is divided into a plurality of subareas 2, 3, 4, and 5 and a first dual-captured image 210, a second dual-captured image 220, a third dual-captured image 230, and a fourth dual-captured image 240 are displayed in the subareas 2 to 5, respectively. The first to fourth dual-captured images 210 to 240 displayed in the subareas 2 to 5, respectively, may be a motion picture, a still image, or a thumbnail image corresponding to the still image. For example, while the first frame of the motion picture 200 is displayed in the first area 1, the thumbnail images 210 to 240 are displayed in the subareas 2 to 5. Next, as a predetermined time passes or a user presses a play start button, a motion picture is reproduced in the first area 1. Then, a summary motion picture is reproduced in the subarea 2 at the timing of capturing a summary motion picture to be reproduced in the subarea 2. At this time, while the motion picture 200 is reproduced in the first area 1, thumbnail images 220 to 240 are displayed in the other subareas 3 to 5.

The reproduction of the summary motion picture reproduced in the subarea 2 is paused at a frame corresponding to the thumbnail image 210 that is first displayed. A summary motion picture is reproduced in the subarea 3 at the capturing timing of the motion picture to be reproduced in the subarea 3. At this time, while the motion picture 200 is reproduced in the first area 1, the thumbnail images 210, 230, and 240 are displayed in the other subareas 2, 4, and 5. The reproduction of the summary motion picture reproduced in the subarea 3 is paused at a frame corresponding to the thumbnail image 220 that is first displayed. The reproduction and pause operations are sequentially performed with respect to the summary motion pictures to be reproduced in the subareas 4 and 5 in the same manner.

Although the motion picture 200 is reproduced in the first area 1 in the above description, the invention is not limited thereto and a still image or a slide image may be displayed. Also, although the timing when the reproductions sequentially start in the subareas 2 to 5 is described as the capturing timing and the timing when the reproduced summary motion pictures are paused is described as a corresponding frame of the thumbnail images 210 to 240 that are first displayed, the invention is not limited thereto and a thumbnail image corresponding to the first frame of a summary motion picture may be displayed, the summary motion picture may be reproduced from the first frame, or the summary motion picture may be paused at the timing of termination of capturing. Also, although in the above description the term "summary motion picture" is used to denote a sub-motion picture that is dual-captured during capturing of the motion picture 200 reproduced in the first area 1, the invention is not limited thereto and a still image may be displayed in the first area 1 and the summary motion picture may mean a corresponding still image and a dual-captured motion picture. Furthermore, the summary motion pictures sequentially reproduced in the respective areas may be included in the respective dual-captured files that are included in several files or may be several files extracted from a single dual-capture file.

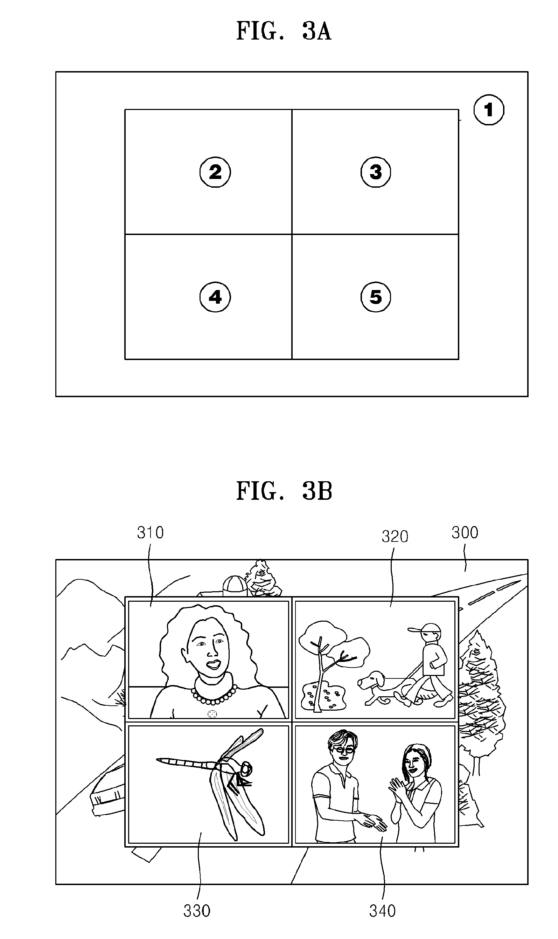

Referring to FIG. 3A, the display screen is divided into a first area 1 and a second area, which is further divided into four subareas 2 to 5. The first area 1 is a main area of the display area and the second area at the center of the display screen is divided into the four subareas 2 to 5. The first area 1 is the main area of the display screen. The second area at the center of the display screen is divided into four subareas 2 to 5. Although the second area is described to be divided into four subareas 2 to 5, the number of subareas is not limited thereto. Also, although the second area in FIG. 3A is described to be at the center of the display screen and the subareas are arranged in order of left and right directions, the invention is not limited thereto and the subareas may be arranged at the four corners of the display screen or in clockwise or counterclockwise order.

Referring to FIG. 3B, a content 300 including a motion picture, a still image, or a slide image, is displayed in the first area of the display screen. Other different contents 310 to 340 are displayed in the subareas of the second area. The contents 310 to 340 displayed in the subareas may be a thumbnail image or a motion picture.

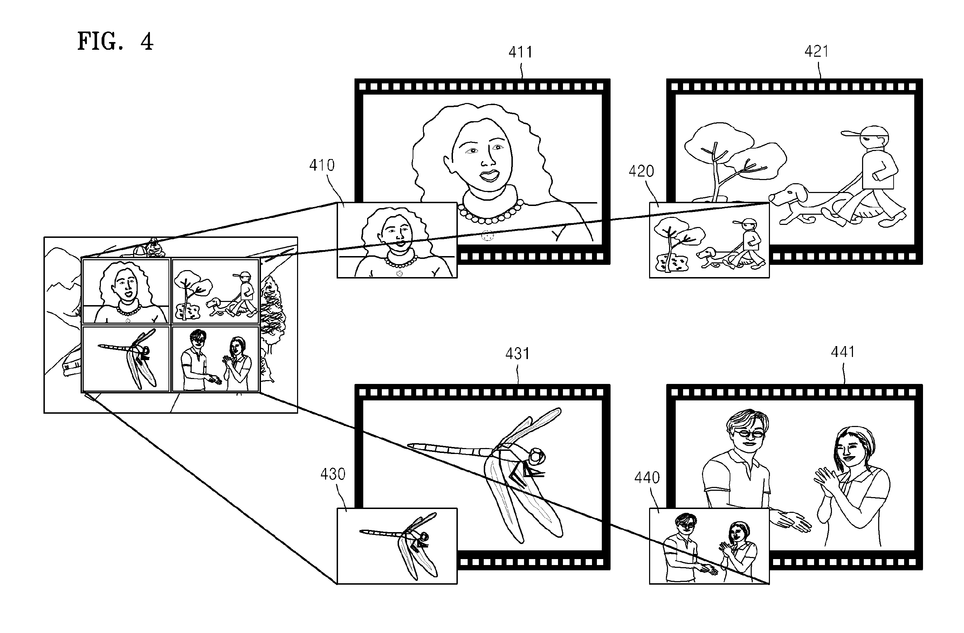

Referring to FIGS. 3A, 3B, and 4, the thumbnail images 310, 320, 330, and 340 are respectively displayed in the subareas 2, 3, 4, and 5. When it is the capturing timing, that is, a recording start time, of a summary motion picture to be reproduced in the subarea 2, a motion picture 411 is reproduced in the subarea 2. Thumbnail images 420 to 440 are displayed in the other subareas 3 to 5, respectively. The reproduction of the motion picture 411 in the subarea 2 is paused at a frame corresponding to the thumbnail image 410 that is first displayed. When it is the capturing timing of a motion picture to be reproduced in the subarea 3, a motion picture 421 is reproduced in the subarea 3. At this time, the thumbnail images 410, 430, and 440 are displayed in the other subareas 2, 4, and 5, respectively. The reproduction of the motion picture 421 in the subarea 3 is paused at a frame corresponding to the thumbnail image 420 that is first displayed. The reproduction and pause operations are sequentially performed with respect to the motion pictures 431 and 441 to be reproduced in the subareas 4 and 5, respectively, in the same manner.

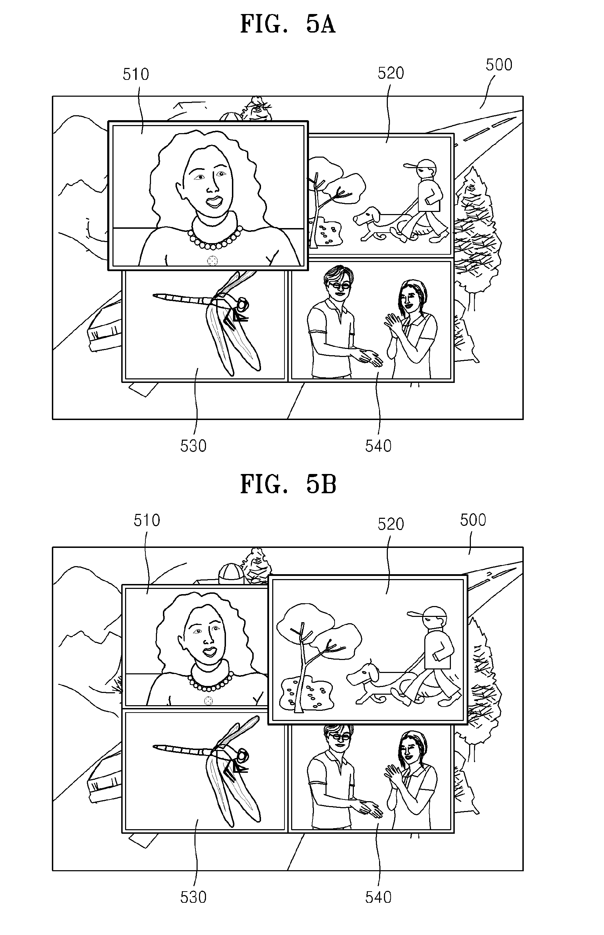

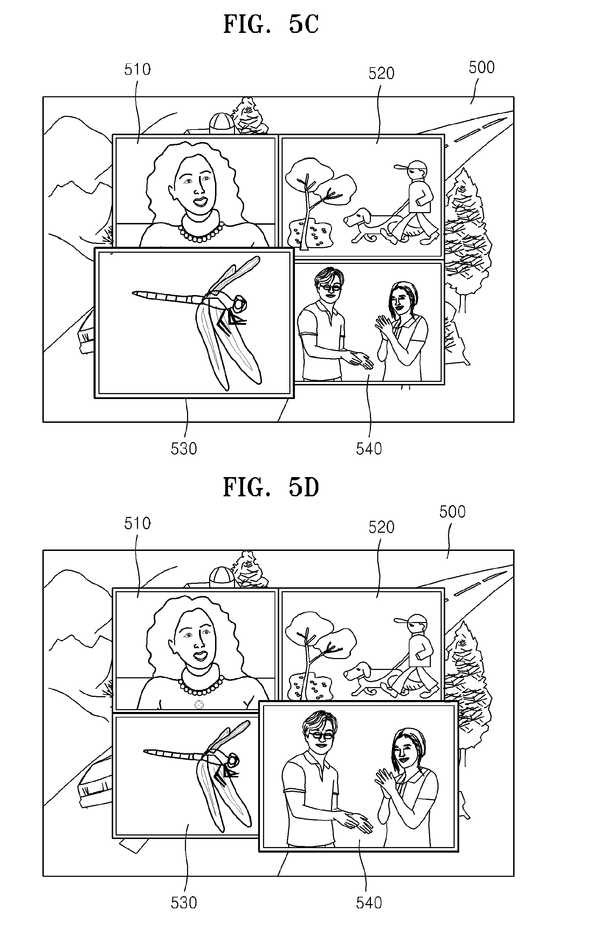

Referring to FIGS. 5A to 5D, as illustrated in FIG. 5A, when it is the capturing timing, that is, a recording time, of a motion picture to be reproduced in the subarea 2, a motion picture 510 is reproduced in the subarea 2 and simultaneously the size of the subarea 2 increases and the size of the motion picture 510 to be reproduced therein increases as well. As illustrated in FIG. 5B, when it is the capturing timing, that is, a recording time, of a motion picture to be reproduced in the subarea 3, a motion picture 520 is reproduced in the subarea 3 and simultaneously the size of the subarea 3 increases and the size of the motion picture 520 to be reproduced therein increases as well. Similarly, as illustrated in FIGS. 5C and 5D, the sizes of the subareas 4 and 5 increase and the sizes of the motion pictures 530 and 540 to be reproduced therein increase as well.

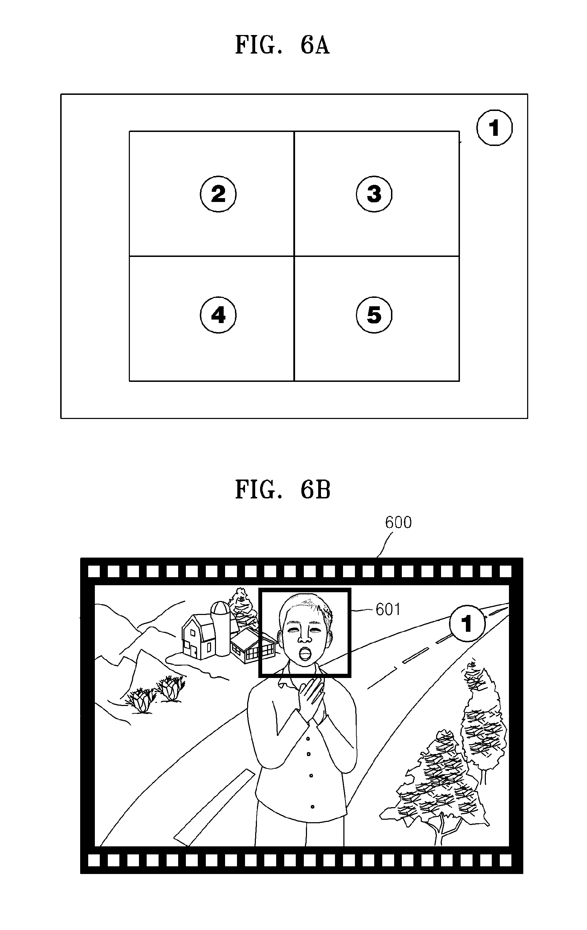

Referring to FIG. 6A to 6C, the first area 1 and the subareas 2 to 5 obtained by dividing the second area are illustrated in FIG. 6A. In FIG. 6B, a motion picture is displayed or reproduced in the first area 1. The DSP 180 performs face detection and searches the stored images for the same face as a face area 601 that is detected. The stored images include still images and motion pictures. The face detection is performed by comparing characteristic data of a face that is previously stored with input image data to recognize whether there is face data in the input image and, if it is determined that the face data exists, recognizing where image data of the face exists. There are many face area detection technologies or algorithms and any of the technologies or algorithm may be used for face detection according to the invention. For example, a face area may be detected by using a motion vector technique, a characteristic detection technique, an Adaboost study technique, etc.

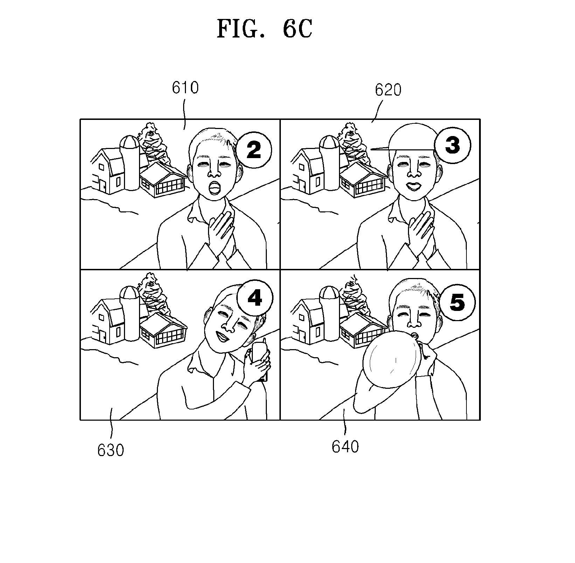

Referring to FIG. 6C, images 610 to 640, including the same face as the detected face in the first area 1, are displayed in the subareas 2 to 5, respectively, in a search order. Also, when the number of images including the searched face is large, the images may be displayed in the subareas 2 to 5 by sequentially swapping the same.

As described above, in the display apparatus according to the invention, multi-contents are diversely displayed and reproduced in one organized screen so that, when a captured still image or motion picture is reproduced, no inconvenient operation is needed to change a sort option in order to change the type of content to be reproduced, for example, from a still image to a motion picture or vice versa, by selecting a full view mode or a thumbnail view mode. Furthermore, when related contents, for example, a summary motion picture or a still image obtained during capturing of a motion picture, are to be reproduced, no inconvenient operation of searching for an individual content among the related contents and reselecting the same for reproduction is needed.

The apparatus described herein may comprise a processor, a memory for storing program data to be executed by the processor, a permanent storage such as a disk drive, a communications port for handling communications with external devices, and user interface devices, including a display, keys, etc. When software modules are involved, these software modules may be stored as program instructions or computer-readable code executable by the processor on a non-transitory computer-readable media such as read-only memory (ROM), random-access memory (RAM), CD-ROMs, magnetic tapes, floppy disks, and optical data storage devices. The computer-readable recording media may also be distributed over network-coupled computer systems so that the computer-readable code is stored and executed in a distributed fashion. This media can be read by the computer, stored in the memory, and executed by the processor.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, Java, assembly language, or the like, with the various algorithms being implemented with any combination of data structures, objects, processes, routines or other programming elements. Functional embodiments may be implemented in algorithms that execute on one or more processors. Furthermore, the invention may employ any number of conventional techniques for electronics configuration, signal processing and/or control, data processing and the like. The words "mechanism" and "element" are used broadly and are not limited to mechanical or physical embodiments, but may include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical connections between the various elements. It should be noted that many alternative or additional functional relationships, physical connections or logical connections may be present in a practical device. Moreover, no item or component is essential to the practice of the invention unless the element is specifically described as "essential" or "critical". It will be recognized that the terms "comprising," "including," and "having," as used herein, are specifically intended to be read as open-ended terms of art.

The use of the terms "a" and "an" and "the" and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention.

While this invention has been particularly shown and described with reference to embodiments thereof, it will be understood by those skilled in the art that various changes in form and details may be made therein without departing from the spirit and scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (100), comprising:
a control unit (180) operable to display a first content (200) in a first area (1) of a display screen; and
a multi-contents generation unit (181) operable to generate a plurality of second contents (210,220,230,240),
wherein:
the control unit (182) is operable to divide a second area of the display screen into a plurality of subareas (2,3,4,5), and
the plurality of second contents are respectively displayed in subareas of the second area.

2. The display apparatus of claim 1, wherein the plurality of second contents comprise a thumbnail image.

3. The display apparatus of claim 1, wherein the plurality of second contents comprise a motion picture.

4. The display apparatus of claim 1, wherein:
the plurality of second contents displayed in the respective subareas of the second area comprise a plurality of thumbnail images, and
the control unit (182) is operable to reproduce a plurality of motion pictures corresponding to the plurality of thumbnail images.

5. The display apparatus of claim 1, wherein the control unit (182) is operable to sequentially reproduce the plurality of second contents that are displayed in the respective subareas of the second area.

6. The display apparatus of claim 1, wherein:
the plurality of second contents displayed in the respective subareas of the second area comprise a plurality of thumbnail images, and
the control unit (182) is operable to reproduce a plurality of motion pictures corresponding to the plurality of thumbnail images in the respective subareas of the second area.

7. The display apparatus of claim 6, wherein the control unit (182) is operable to reproduce a first motion picture of the plurality of motion pictures in a first subarea of the respective subareas of the second area until a frame corresponding to a first thumbnail image of the plurality of thumbnail images and then terminates the reproduction, or the control unit (182) is operable to reproduce a first motion picture of the plurality of motion pictures in a first subarea of the respective subareas of the second area from a frame corresponding to a first thumbnail image of the plurality of thumbnail images, or the control unit reproduces a first motion picture of the plurality of motion pictures in a first subarea of the respective subareas of the second area until a frame corresponding to a first thumbnail image of the plurality of thumbnail images, and displays the first thumbnail image in the first subarea.

8. The display apparatus of claim 7, wherein the control unit (182) is operable to reproduce a second motion picture of the plurality of motion pictures in a second subarea of the respective subareas of the second area from a frame corresponding to a second thumbnail image of the plurality of thumbnail images.

9. The display apparatus of claim 1, wherein:
the plurality of second contents displayed in the second area comprise a plurality of thumbnail images, and
the control unit (182) is operable to sequentially reproduce a plurality of motion pictures corresponding to the plurality of thumbnails in the respective subareas of the second area.

10. The display apparatus of claim 1, wherein:
the plurality of second contents comprise a plurality of thumbnail images, and
the control unit (182) is operable to sequentially reproduce the plurality of motion pictures in the respective subareas of the second area and increases a size of a motion picture that is being reproduced.

11. The display apparatus of claim 1, wherein:
the plurality of second contents comprise a plurality of motion pictures, and
each of the plurality of motion pictures comprises a dual-captured motion picture.

12. The display apparatus of claim 1, wherein the first content and the plurality of second contents are included in a dual-captured file.

13. The display apparatus of claim 1, wherein:
the plurality of second contents comprise a plurality of motion pictures, and
the plurality of motion pictures comprise motion pictures extracted from a single dual-captured motion picture.

14. The display apparatus of claim 1, wherein:
the first content is a motion picture, and
the plurality of the second contents are a plurality of thumbnail images corresponding to a plurality of still images obtained during capturing of the motion picture.

15. A display method, comprising:
displaying a first content (200) in a first area (1) of a display screen;
generating a plurality of second contents (210,220,230,240);
dividing a second area of the display screen into a plurality of subareas (2,3,4,5); and
displaying the plurality of second contents in the respective subareas of the second area.
